(19) Europäisches Patentamt
European Patent Office
Office européen des brevets

(11) **EP 3 594 717 A1**

(12) **EUROPEAN PATENT APPLICATION**
published in accordance with Art. 153(4) EPC

(43) Date of publication:
**15.01.2020 Bulletin 2020/03**

(51) Int Cl.:
*G01S 13/34* (2006.01)       *G01S 7/02* (2006.01)
*G01S 13/93* (2020.01)

(21) Application number: **18763133.8**

(22) Date of filing: **02.02.2018**

(86) International application number:
**PCT/JP2018/003567**

(87) International publication number:
**WO 2018/163677 (13.09.2018 Gazette 2018/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **06.03.2017   JP 2017042001**

(71) Applicant: **Hitachi Automotive Systems, Ltd. Hitachinaka-shi, Ibaraki 312-8503 (JP)**

(72) Inventors:
• **UMEHIRA Masahiro**
  **Hitachi-shi**
  **Ibaraki 316-8511 (JP)**
• **TAKEDA Shigeki**
  **Hitachi-shi**
  **Ibaraki 316-8511 (JP)**
• **KURODA Hiroshi**
  **Hitachinaka-shi,**
  **Ibaraki 312-8503 (JP)**

(74) Representative: **Mewburn Ellis LLP**
  **City Tower**
  **40 Basinghall Street**
  **London EC2V 5DE (GB)**

(54) **RADAR DEVICE**

(57)     To accurately detect interference in a radar device, this radar apparatus 1 is provided with: an average amplitude calculation unit 122 that calculates an average amplitude of a beat signal based on a transmission signal and a reception signal; and an interference detection unit 123 that detects an interference signal with respect to the reception signal on the basis of the average amplitude of the beat signal calculated by the average amplitude calculation unit 122.

*FIG. 4*

## Description

Technical Field

The present invention relates to a radar device.

Background Art

In the related art, radar devices that detect an obstacle or the like around a vehicle for use in automatic driving of a vehicle or a driving support system are known. When the number of vehicles equipped with radar devices increases with the spread of automatic driving and driving support systems, radar signals transmitted from radar devices of other vehicles are received as interference signals, which increases the risk that obstacles or the like cannot be accurately detected. Therefore, in such radar devices, it is desired to detect interference when interference is occurring and to take appropriate measures. PTL 1 discloses a signal processing device of an FMCW radar that detects and removes unexpected noise by calculating an amplitude density of a beat signal obtained by mixing a transmission signal and a reception signal and setting an allowable upper limit value and an allowable lower limit value of the beat signal on the basis of the amplitude density.

Citation List

Patent Literature

PTL 1: JP H7-110373 A

Summary of Invention

Technical Problem

In the signal processing device of PTL 1, the allowable upper limit value and the allowable lower limit value of the beat signal are set on the premise that the amplitude of the beat signal as a reference does not change. However, for example, in a radar device in which the phase noise of a transmitter is relatively large such as a millimeter wave radar, there are cases where the amplitude of the beat signal fluctuates even without interference. Moreover, the level of reception signal in a radar device of a vehicle fluctuates as the surrounding environment of the vehicle changes, and the amplitude of the beat signal also fluctuates accordingly. Therefore, in the method described in PTL 1, accurate interference detection cannot always be performed.

Solution to Problem

A radar device according to the present invention transmits a frequency-modulated transmission signal, receives a reception signal which is the transmission signal reflected by an object, and measures a distance to the object. The radar device includes: an average amplitude calculation unit which calculates an average amplitude of a beat signal which is based on the transmission signal and the reception signal; and an interference detection unit which detects an interference signal with respect to the reception signal on a basis of the average amplitude of the beat signal calculated by the average amplitude calculation unit.

Advantageous Effects of Invention

According to the present invention, interference detection in a radar device can be accurately performed.

Brief Description of Drawings

[FIG. 1] FIG. 1 is a diagram illustrating a configuration of a general FMCW radar device.
[FIG. 2] FIG. 2 is a diagram for explaining the operation of the FMCW radar device.
[FIG. 3] FIG. 3 is a diagram for explaining interference behavior in the FMCW radar device.
[FIG. 4] FIG. 4 is a diagram illustrating a configuration of a radar device according to a first embodiment of the present invention.

[FIG. 5] FIG. 5 is a diagram illustrating processing of the radar device according to the first embodiment of the present invention.

[FIG. 6] FIG. 6 is a diagram illustrating an example of interference suppression when the frequency of an interference signal is high.

[FIG. 7] FIG. 7 is a diagram illustrating an example of interference suppression when the frequency of an interference signal is low.

[FIG. 8] FIG. 8 is a diagram illustrating an example in which signals before and after interference suppression are compared.

[FIG. 9] FIG. 9 is a diagram illustrating a configuration of a radar device according to a second embodiment of the present invention.

[FIG. 10] FIG. 10 is a diagram illustrating processing of the radar device according to the second embodiment of the present invention.

[FIG. 11] FIG. 11 is a diagram illustrating processing of the radar device according to the second embodiment of the present invention.

[FIG. 12] FIG. 12 is a diagram illustrating an example in which signals before and after amplitude fluctuation removal are compared.

Description of Embodiments

FMCW Radar Device

Radar devices include FMCW radar devices that transmit a chirp signal, the frequency of which is swept, as a transmission signal. When this transmission signal is reflected by an object, a signal delayed by time corresponding to the distance to the object is received, and thus the distance to the object can be measured from the frequency of a beat signal obtained by multiplying the transmission signal and the reception signal. The FMCW radar device is promising as one of the means for recognizing the surrounding environment in automatic driving of a vehicle.

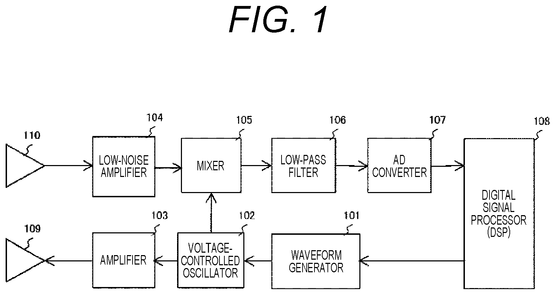

FIG. 1 is a diagram illustrating a configuration of a general FMCW radar device. The radar device illustrated in FIG. 1 includes a waveform generator 101, a voltage-controlled oscillator 102, an amplifier 103, a low-noise amplifier 104, a mixer 105, a low-pass filter 106, an AD converter 107, a digital signal processor (DSP) 108, a transmission antenna 109, and a reception antenna 110.

The waveform generator 101 generates a voltage waveform of a voltage changing continuously in a predetermined cycle under the control by the DSP 108 and outputs the voltage waveform to the voltage-controlled oscillator 102. The voltage-controlled oscillator 102 generates a transmission signal of an oscillation frequency controlled in accordance with the voltage waveform input from the waveform generator 101 and outputs the transmission signal to the amplifier 103 and the mixer 105. The amplifier 103 amplifies the transmission signal input from the voltage-controlled oscillator 102 and outputs the amplified transmission signal to the transmission antenna 109. The transmission antenna 109 emits the transmission signal input from the amplifier 103 into space. As a result, an FMCW signal in which a continuous wave is frequency-modulated is transmitted from the radar device.

The reception antenna 110 receives a reception signal, in which the transmission signal is reflected by the object, and outputs the reception signal to the low-noise amplifier 104. The low-noise amplifier 104 amplifies the reception signal input from the reception antenna 110 and outputs the amplified signal to the mixer 105. The mixer 105 includes a multiplier and multiplies the transmission signal input from the voltage-controlled oscillator 102 and the reception signal input from the low-noise amplifier 104 to obtain a beat signal corresponding to the frequency difference between these signals and output the beat signal to the low-pass filter 106. The low-pass filter 106 extracts a low frequency component of the beat signal input from the mixer 105 and outputs the low frequency component to the AD converter 107. The AD converter 107 generates digital values of the beat signal by converting the beat signal input from the low-pass filter 106 into a digital signal at a predetermined sampling period, and outputs the digital values to the DSP 108. The DSP 108 performs fast Fourier transform (FFT) on the digital values of the beat signal obtained by the AD converter 107 to obtain a signal waveform obtained by decomposing the beat signal into frequency components. Then, by detecting a peak exceeding a threshold value set in advance in the signal waveform, the frequency of the beat signal corresponding to the distance to the object is obtained, and the distance to the object is calculated.

The FMCW radar device of FIG. 1 generates a voltage waveform of, for example, a triangular wave or a saw tooth wave by the waveform generator 101 and outputs the voltage waveform to the voltage-controlled oscillator 102 to transmit a transmission signal obtained by frequency-modulating a continuous wave. A reflection wave, which is the transmission signal reflected by the object, is input to the mixer 105 as a reception signal after delay time proportional to a distance d to the object. Therefore, a beat signal having a frequency proportional to the delay time can be obtained.

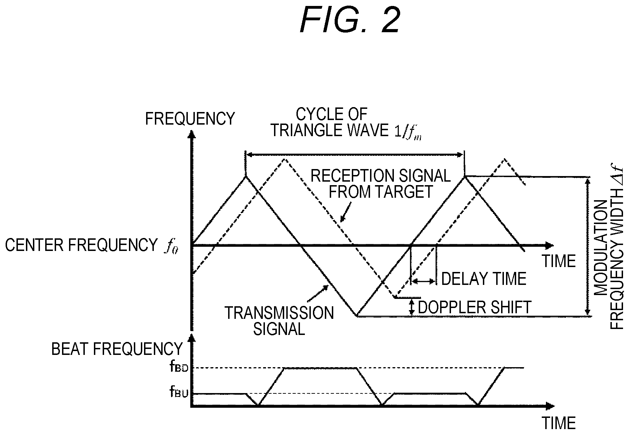

FIG. 2 is a diagram for explaining the operation of the FMCW radar device in a case where a triangular wave is generated by the waveform generator 101. In this case, as illustrated in FIG. 2, a transmission signal and a reception signal the frequencies of which change in a triangular wave shape can be obtained. Let the frequency of a beat signal obtained in an interval where the frequency of the transmission signal falls be a downbeat frequency $f_{BD}$, and let the frequency of a beat signal obtained in an interval where the frequency of the transmission signal rises be an upbeat frequency $f_{BU}$, the distance d to the object and the relative velocity v are derived by the following equations (1) and (2), respectively. In equations (1) and (2), c represents the speed of light, $f_m$ represents the frequency of the triangular wave, $\Delta f$ represents the modulation frequency width of the transmission signal, and $f_0$ represents the center frequency of the transmission signal.

$$d = c \cdot (f_{BD} + f_{BU}) / (8\Delta f \cdot f_m) \quad \cdots \quad (1)$$

$$v = c \cdot (f_{BD} - f_{BU}) / (4f_0) \quad \cdots \quad (2)$$

From the above equations (1) and (2), it is understood that the distance d to the object and the relative velocity v can be calculated by measuring the beat frequencies $f_{BD}$ and $f_{BU}$ for each increase/decrease interval of the frequency of the transmission signal and calculating the sum and the difference thereof.

In recent years, with the spread of automatic driving and driver assistance systems, installation of a radar device on a vehicle is progressing. Such onboard radar devices are used to detect the distance to an object, the position of an object, and the like as the surrounding environment of a vehicle by regarding people, obstacles, other vehicles, etc. existing around the vehicle as objects. When the number of vehicles mounted with a radar device increases, radar signals transmitted from other vehicles in a short distance may be received as interference signals.

Here, let us consider a case where two FMCW radar devices using transmission signals in the same frequency band exist in a short distance. In this case, a transmission signal of one of the FMCW radar devices becomes an interference signal to the other FMCW radar device, thereby causing interference. Note that the radar signal becoming an interference signal is not limited to a radar signal of the FMCW radar system, and radar signals of other radar systems such as a pulse radar system or a CW radar system may be interference signals as long as the radar signal is in the same frequency band.

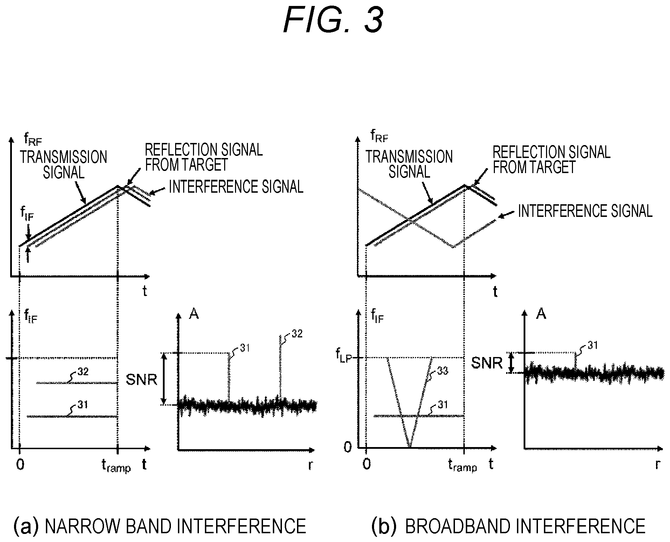

FIG. 3 is a diagram for explaining interference behavior in one of the FMCW radar devices in the case where there are two FMCW radar devices as described above. In FIG. 3, (a) is a diagram illustrating narrow band interference, and (b) is a diagram illustrating broadband interference.

The narrow band interference illustrated in FIG. 3(a) occurs when the ramp (frequency sweep) of the interference signal and the ramp of the reflection wave from the target (object) are equal. In this case, the frequency of a beat signal of the interference signal and the frequency of a beat signal of the reflection wave from the target both have constant values as indicated by symbols 31 and 32, respectively. Therefore, the interference signal is erroneously detected as a ghost target in a reception signal obtained by combining these.

The broadband interference illustrated in FIG. 3(b) occurs when the ramp of the interference signal and the ramp of the reflection wave from the target are reversed. In this case, the frequency of a beat signal of the reflection wave from the target has a constant value as indicated by symbol 31. On the other hand, the frequency of a beat signal of the interference signal changes in a V-shape over the broadband as indicated by symbol 33, and has a spectrum similar to that of white noise. Therefore, in the reception signal obtained by combining these, a noise floor increases, and a signal to noise ratio (SNR) falls, and it becomes difficult to detect a distant target.

In FMCW radar devices mounted on a vehicle, it is required to reduce the interference as described above. Note that the probability that an interference signal is erroneously detected as a ghost target due to narrow band interference is smaller than the probability that broadband interference occurs. Therefore, in practice, it is more important to reduce an increase of noise due to broadband interference. Hereinafter, embodiments of the present invention for reducing interference in a radar device will be described using the drawings.

First Embodiment

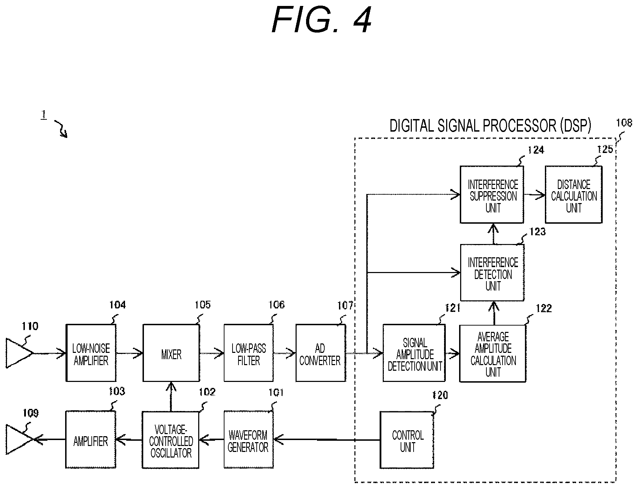

FIG. 4 is a diagram illustrating a configuration of a radar device according to a first embodiment of the present invention. A radar device 1 illustrated in FIG. 4 is an FMCW radar device, and has a hardware configuration similar to that of FIG. 1. That is, the radar device 1 includes a waveform generator 101, a voltage-controlled oscillator 102, an amplifier 103, a low-noise amplifier 104, a mixer 105, a low-pass filter 106, an AD converter 107, a DSP 108, a transmission antenna 109, and a reception antenna 110, each of which has been described in FIG. 1. The DSP 108 includes, as its functions, a control unit 120, a signal amplitude detection unit 121, an average amplitude calculation unit 122, an interference detection unit 123, an interference suppression unit 124, and a distance calculation unit 125.

The control unit 120 controls the waveform generator 101 and controls the operation timing and the like of the radar device 1. The signal amplitude detection unit 121 detects the amplitude of the beat signal on the basis of the digital values of the beat signal input from the AD converter 107. The average amplitude calculation unit 122 calculates the average amplitude of the beat signal on the basis of the amplitude of the beat signal detected by the signal amplitude detection unit 121. The interference detection unit 123 detects an interference signal with respect to the reception signal from the object on the basis of the average amplitude of the beat signal calculated by the average amplitude calculation unit 122. The interference suppression unit 124 performs interference suppression processing for suppressing interference due to the interference signal detected by the interference detection unit 123. The distance calculation unit 125 calculates the distance to the object using the reception signal in which the interference is suppressed by the interference suppression processing. These functions of the DSP 108 will be described in detail later.

The radar device 1 can implement the above functions by software processing executed by the DSP 108. Note that instead of the DSP 108, the functions may be implemented by hardware in which logic circuits and the like are combined.

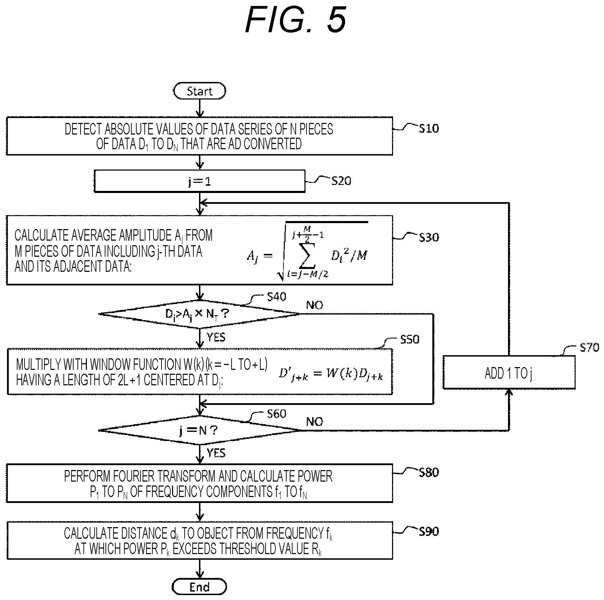

FIG. 5 is a diagram illustrating processing of the radar device according to the first embodiment of the present invention. The radar device 1 executes the processing illustrated in FIG. 5 at a predetermined processing cycle by executing a predetermined program in the DSP 108. Note that the processing of FIG. 5 may be implemented by hardware as described above.

In step S10, the signal amplitude detection unit 121 of the DSP 108 detects the amplitude of the beat signal by detecting absolute values of the beat signal that has been AD converted into digital values by the AD converter 107. Here, for example, assuming that a data series of N pieces of data $D_1$ to $D_N$ has been obtained by AD converting the beat signal at a predetermined sampling period in the AD converter 107, the amplitude of the beat signal is detected by detecting the absolute values of the data series.

In step S20, the DSP 108 sets 1 to a variable j.

Next, in step S30, the average amplitude calculation unit 122 of the DSP 108 calculates a j-th average amplitude $A_j$ in the beat signal using the current value of the variable j. In this example, the average amplitude $A_j$ is calculated using M pieces of data including the j-th data and its adjacent data out of the data series of N pieces of data $D_1$ to $D_N$ for which the amplitude has been determined in step S10. The average amplitude $A_j$ may be calculated by simple averaging in which absolute values of the M pieces of data are added and then divided by M. Alternatively, the average amplitude $A_j$ may be calculated by dividing the sum of absolute values of the M pieces of data by the number of samples M. Alternatively, the following equation (3) may be used to perform the calculation with an effective value obtained as a root mean square of the M pieces of data. Other than the above, the average amplitude $A_j$ as a moving average of the beat signal can be calculated by any calculation method using the M pieces of data including the j-th data and its adjacent data.

[Equation 1]

$$A_j = \sqrt{\sum_{i=j-M/2}^{j+\frac{M}{2}-1} D_i^2/M} \qquad \cdots (3)$$

Note that, in step S30, M is a design parameter and can be set to any value. It is preferable to set the value of M such that, assuming a time period during which interference occurs in a beat signal when an interference signal exists, the average amplitude $A_j$ is calculated for a data interval corresponding to a predetermined time period sufficiently longer than the time period of the interference. This allows the average amplitude $A_j$ to have equivalent values in both cases of with and without interference occurrence.

Next, in step S40, the interference detection unit 123 of the DSP 108 detects an interference signal on the basis of the amplitude of the j-th data $D_j$ from the data series $D_1$ to $D_N$ detected in step S10 and the average amplitude $A_j$ calculated in step S30. In this example, a threshold value is set by multiplying the average amplitude $A_j$ by a predetermined magnification $N_T$, and this threshold value is compared with the amplitude of the data $D_j$. As a result, if the amplitude of the data $D_j$ is larger than the threshold value, that is, if $D_j > A_j \times N_T$, it is determined that there is an interference signal, and the data $D_j$ is detected as the data position where the interference signal exists, then the processing proceeds to step S50. On the other hand, if the amplitude of the data $D_j$ is less than or equal to the threshold value, it is determined that there is no interference signal, and the processing proceeds to step S60.

Note that the magnification $N_T$ used to set the threshold value in the above step S40 is a design parameter, and thus any value can be set. When the magnification $N_T$ is too large, an interference signal of a small level cannot be detected, whereas when the magnification $N_T$ is too small, erroneous detection of an interference signal is obtained despite absence of interference signals, which causes a decrease in the SNR of the beat signal. Therefore, the magnification $N_T$ needs to be set appropriately as a design parameter. Here, the magnification $N_T$ may vary as appropriate depending on a surrounding environment of the radar device 1 or the object such as the radio wave environment, structures, the topography, road conditions, or the weather.

If the processing proceeds from step S40 to step S50, in step S50, the interference suppression unit 124 of the DSP 108 suppresses interference by the interference signal by multiplying the beat signal in which the interference signal has been detected in step S40 by a predetermined window function. In this example, each pieces of data $D_{j+k}$ ($k$ = -L to +L) present in a range of the width (length) $2L + 1$ of the window function, centered at the data $D_j$ detected as the data position where the interference signal is present in step S40 among the data series of N pieces of data $D_1$ to $D_N$ the amplitude of which has been detected in step S10, is multiplied by the predetermined window function $W(k)$. As a result, data $D'_{j+k}$ in which the interference is suppressed is obtained from the original data $D_{j+k}$ including the data $D_j$ in which the interference signal has been detected. When the data $D'_{j+k}$ after the interference suppression is calculated, the processing proceeds to step S60.

Note that, as the window function used in the interference suppression processing in step S40, for example, a rectangular window in which $W(k) = 0$ holds where the value of k ranges from j - L to j + L with k = j at the center, or a raised cosine window may be used. Other than the above, various functions, in which at least a value at k = j which is a data position where an interference signal has been detected becomes larger than or equal to 0 and less than 1, may be used as the window function in step S40. Alternatively, instead of using a window function, interference may be suppressed by invalidating a data series of a predetermined range including the data $D_j$ in which an interference signal exists.

The value L which defines the width of the window function described above is a design parameter, and thus any value can be set. L = 0 may be used. In the case of L = 0, only the data $D_j$ having been determined to include an interference signal in step S40 is multiplied by the window function to suppress the interference, and the data series before and after the data $D_j$ is used as it is without suppressing interference.

In step S60, the DSP 108 determines whether the current value of the variable j is equal to the number of pieces of data N of the data series. If j is less than N, 1 is added to the value of the variable j in step S70, and then the processing returns to step S30. As a result, the processing of steps S30 to S50 is repeatedly executed while j = 1 to N is satisfied, and a data series $D'_1$ to $D'_N$ after interference suppression is obtained for the data series of N pieces of data $D_1$ to $D_N$. However, in the data series $D'_1$ to $D'_N$ after interference suppression, for data that has never been multiplied by the window function in step S50, the original data values are used as they are as data values after interference suppression.

If it is determined in step S60 that j = N is satisfied, the processing proceeds to step S80. In step S80, the distance calculation unit 125 of the DSP 108 performs Fourier transform on the data series $D'_1$ to $D'_N$ after the interference suppression obtained from the above-described processing to decompose the beat signal into frequency components $f_1$ to $f_N$ and calculates power $P_1$ to $P_N$ of these frequency components.

In step S90, the distance calculation unit 125 of the DSP 108 calculates the distance to the object using the power $P_1$ to $P_N$ calculated in step S80 in a similar manner to that in a general FMCW radar device. That is, power $P_k$ which is larger than a predetermined threshold value $R_k$ is detected from among the power $P_1$ to $P_N$, and the distance $d_k$ to the object is calculated on the basis of a frequency $f_k$ corresponding to the power $P_k$. After calculating the distance $d_k$ to the object in step S90, the DSP 108 outputs the calculation result to the outside of the radar device 1 and then terminates the processing illustrated in FIG. 5.

Note that among the processing described above, in step S30, the average amplitude calculation unit 122 may derive an average amplitude of the beat signal by using a low-pass filter having a filtering characteristic corresponding to the above-described parameter M instead of calculating the average amplitude $A_j$ as the moving average of the beat signal. That is, the average amplitude calculation unit 122 can be replaced by a low-pass filter.

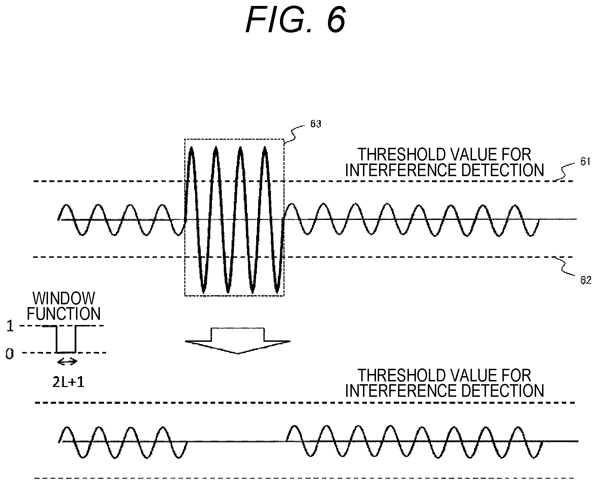

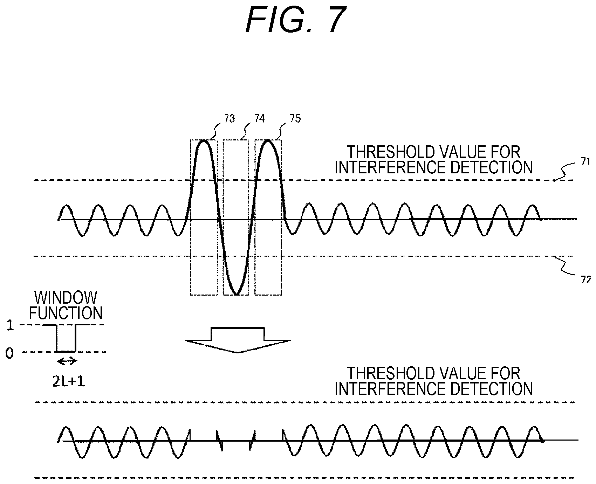

Here, the relationship between the width of the window function and the frequency of the interference signal in the interference suppression processing performed in step S50 of FIG. 5 will be described below with reference to FIGS. 6 and 7. FIGS. 6 and 7 are diagrams illustrating exemplary interference suppression.

FIG. 6 illustrates exemplary interference suppression in a case where the frequency of the interference signal is higher as compared to the width of the window function. In this case, a cycle of the beat signal subjected to the interference is shorter than time corresponding to the width $2L + 1$ of the window function. Therefore, when the values indicated by symbols 61 and 62 are set as threshold values for interference detection for the beat signal, the window function is multiplied to a signal range indicated by symbol 63, and all the values of the beat signal values in this range become zero. As a result, the interference signal is completely suppressed.

FIG. 7 illustrates exemplary interference suppression in a case where the frequency of the interference signal is lower as compared to the width of the window function. In this case, a cycle of the beat signal subjected to the interference is longer than time corresponding to the width $2L + 1$ of the window function. Therefore, when the values indicated by symbols 71 and 72 are set as threshold values for interference detection for the beat signal, the window function is multiplied to signal ranges indicated by symbols 73, 74, and 75, and all the values of the beat signal values in this range become zero, thereby suppressing the interference signal. Meanwhile, between the signal range 73 and the signal range 74 and between the signal range 74 and the signal range 75, there are small sections where the interference signal remains without being multiplied by the window function. However, since the level of the interference signal in these remaining sections is small, a decrease in the SNR due to the interference is small, which does not hinder calculation of the distance to the object.

Note that, in actual operation of the radar device 1, it is assumed that a frequency-modulated signal is input as an interference signal. A beat signal obtained in this case is a signal in which the states of FIG. 6 and FIG. 7 are mixed.

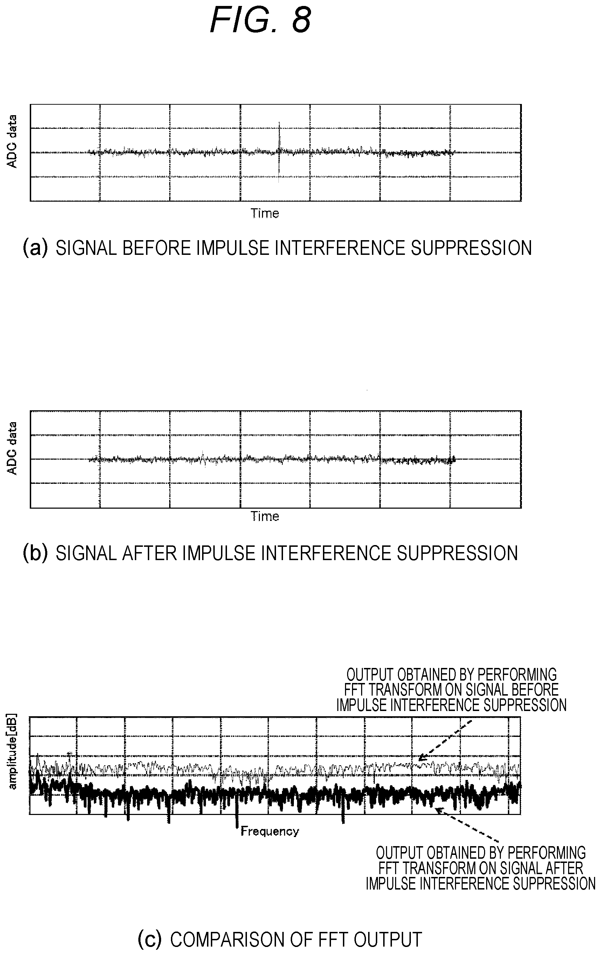

FIG. 8 is a diagram illustrating an example in which signals before and after interference suppression by the processing described in FIG. 5 are compared. In FIG. 8, (a) illustrates an example of a beat signal before interference suppression in a case where an impulse signal is superimposed on a reception signal as an interference signal, and (b) illustrates an example of a beat signal after interference suppression in which the interference signal is suppressed from the signal of (a) according to the method of the present embodiment. In addition, (c) illustrates results obtained by performing Fourier transform on the signals of (a) and (b). From these diagrams, it is understood that the noise level is reduced in the beat signals after the interference suppression.

According to the first embodiment of the present invention described above, the following effects are obtained.

(1) The radar device 1 transmits a frequency-modulated transmission signal, receives a reception signal which is the transmission signal reflected by an object, and measures a distance to the object. This radar device 1 includes: the average amplitude calculation unit 122 that calculates the average amplitude $A_j$ of the beat signal based on the transmission signal and the reception signal; and the interference detection unit 123 that detects the interference signal with respect to the reception signal on the basis of the average amplitude $A_j$ of the beat signal calculated by the average amplitude calculation unit 122. With this arrangement, interference detection in the radar device 1 can be performed accurately.

(2) The interference detection unit 123 detects an interference signal by setting a threshold value obtained by multiplying the average amplitude $A_j$ of the beat signal by a predetermined magnification $N_T$ and comparing the beat signal with the threshold value (step S40). With this arrangement, even when the level of the reception signal fluctuates, it is possible to set an appropriate threshold value and to perform interference detection accurately.

(3) The interference detection unit 123 may cause the magnification $N_T$ to vary depending on a surrounding environment of the radar device 1 or the object. With this arrangement, it is possible to set an appropriate threshold value depending on the surrounding environment and to perform interference detection more accurately.

(4) The radar device 1 further includes the interference suppression unit 124 which suppresses interference by the interference signal by multiplying the beat signal by the window function W(k). With this arrangement, even when interference is detected, it is possible to accurately calculate the distance to the object by excluding the influence of the interference.

(5) The interference suppression unit 124 performs the interference suppression processing in step S50 using a function such as that of a rectangular window, in which at least a value at a position where an interference signal has been detected becomes larger than or equal to 0 and less than 1, as the window function W(k). With this arrangement, interference can be suppressed easily and reliably.

(6) The average amplitude calculation unit 122 calculates the average value or an effective value of the beat signal at predetermined time as the average amplitude $A_j$ of the beat signal (step S30). With this arrangement, even when interference is caused by the interference signal, it is possible to calculate the average amplitude $A_j$ by excluding the influence of the interference. As a result, the interference detection unit 123 can set an appropriate threshold value.

Second Embodiment

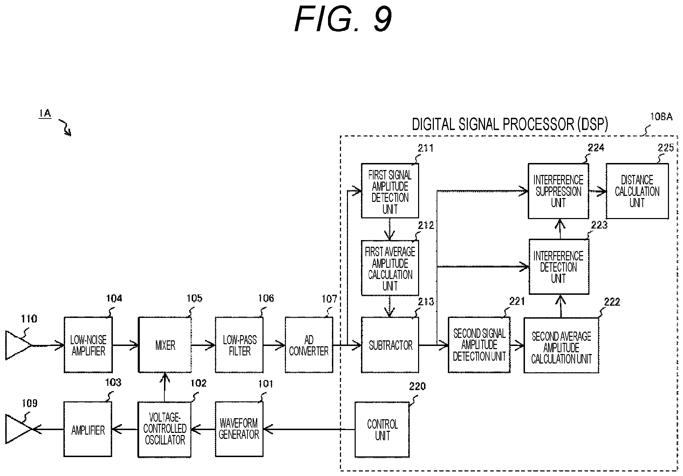

FIG. 9 is a diagram illustrating a configuration of a radar device according to a second embodiment of the present invention. A radar device 1A illustrated in FIG. 9 is an FMCW radar device like the radar device 1 described in the first embodiment. The radar device 1A has a hardware configuration similar to that of the radar device 1 except that a DSP 108A is included instead of the DSP 108 of FIG. 1. The DSP 108A includes, as its functions, a first signal amplitude detection unit 211, a first average amplitude calculation unit 212, a subtractor 213, a control unit 220, a second signal amplitude detection unit 221, a second average amplitude calculation unit 222, an interference detection unit 223, an interference suppression unit 224, and a distance calculation unit 225.

The first signal amplitude detection unit 211 detects the amplitude of a beat signal on the basis of digital values of the beat signal input from an AD converter 107. The first average amplitude calculation unit 212 calculates the average amplitude of the beat signal on the basis of the amplitude of the beat signal detected by the first signal amplitude detection unit 211. The subtractor 213 subtracts the average amplitude of the beat signal calculated by the first signal amplitude detection unit 211 from the digital values of the beat signal input from the AD converter 107. The control unit 220 controls a waveform generator 101 and also controls the operation timing and the like of the radar device 1A.

The second signal amplitude detection unit 221, the second average amplitude calculation unit 222, the interference detection unit 223, the interference suppression unit 224, and the distance calculation unit 225 perform processing similar to that of the amplitude detection unit 121, the average amplitude calculation unit 122, the interference detection unit 123, the interference suppression unit 124, and the distance calculation unit 125 described in the first embodiment, respectively, on the basis of the output from the subtractor 213. That is, the second signal amplitude detection unit 221 detects the amplitude of the subtracted beat signal on the basis of digital values of the subtracted beat signal that are input from the subtractor 213. The second average amplitude calculation unit 222 calculates the average amplitude of the subtracted beat signal on the basis of the amplitude of the subtracted beat signal detected by the second signal amplitude detection unit 221. The interference detection unit 223 detects an interference signal with respect to the reception signal from the object on the basis of the average amplitude of the subtracted beat signal calculated by the second average amplitude calculation unit 222. The interference suppression unit 224 performs interference suppression processing for suppressing interference by the interference signal detected by the interference detection unit 223. The distance calculation unit 225 calculates the distance to the object using the reception signal in which the interference is suppressed by the interference suppression processing. These functions of the DSP 108A will be described in detail later.

The radar device 1A can implement the above functions by software processing executed by the DSP 108A. Note that instead of the DSP 108A, the functions may be implemented by hardware in which logic circuits and the like are combined.

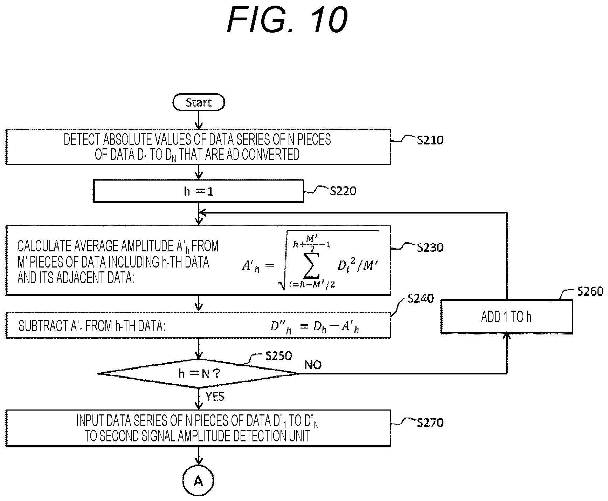

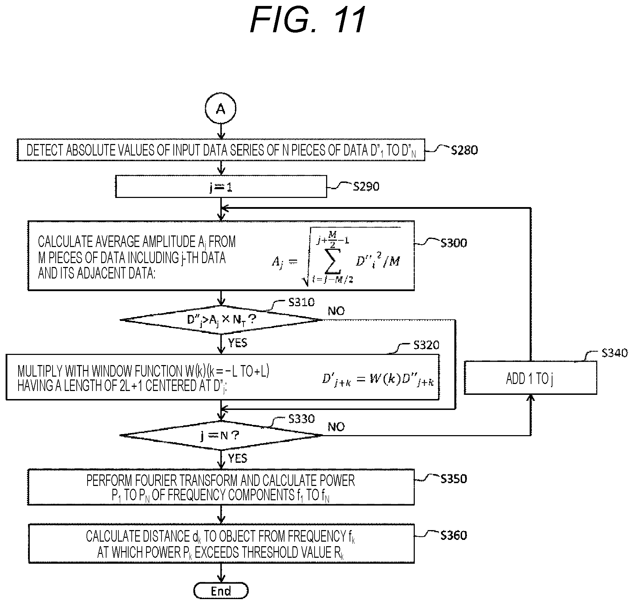

FIGS. 10 and 11 are diagrams illustrating processing of the radar device according to the second embodiment of the present invention. The radar device 1A executes the processing illustrated in FIGS. 10 and 11 at a predetermined processing cycle by executing a predetermined program in the DSP 108A. Note that the processing of FIGS. 10 and 11 may be implemented by hardware as described above.

In step S210 of FIG. 10, the first signal amplitude detection unit 211 of the DSP 108A detects the amplitude of the beat signal by detecting absolute values of the beat signal that has been AD converted into digital values by the AD converter 107. Here, like in step S10 of FIG. 5 described in the first embodiment, for example, assuming that a data series of N pieces of data $D_1$ to $D_N$ has been obtained by AD converting the beat signal at a predetermined sampling period in the AD converter 107, the amplitude of the beat signal is detected by detecting the absolute values of the data series.

In step S220, the DSP 108A sets 1 to a variable h.

Next, in step S230, the first average amplitude calculation unit 212 of the DSP 108A calculates an h-th average amplitude $A'_h$ in the beat signal using the current value of the variable h. In this example, the average amplitude $A'_h$ is calculated using M' pieces of data including the h-th data and its adjacent data out of the data series of N pieces of data $D_1$ to $D_N$ for which the amplitude has been determined in step S210. Like in step S30 of FIG. 5 described in the first embodiment, the average amplitude $A'_h$ may be calculated by simple averaging in which absolute values of the M' pieces of data are added and then divided by M'. Alternatively, the average amplitude $A'_h$ may be calculated by dividing the sum of absolute values of the M' pieces of data by the number of samples M'. Alternatively, the following equation (4) may be used to perform the calculation with an effective value obtained as a root mean square of the M' pieces of data. Other than the above, the average amplitude $A'_h$ as a moving average of the beat signal can be calculated by any calculation method using the M' pieces of data including the h-th data and its adjacent data.

[Equation 2]

$$A'_h = \sqrt{\sum_{i=h-M'/2}^{h+\frac{M'}{2}-1} D_i^2 / M'} \qquad \cdot \cdot \cdot (4)$$

Note that, in step S230, M' is a design parameter and can be set to any value. It is preferable to set the value of M' such that, assuming a time period during which fluctuations of a direct current occur in a beat signal when an interference signal exists, the average amplitude $A'_h$ is calculated for a data interval corresponding to a predetermined time period shorter than the time period of the fluctuations. This allows the subtractor 213 to subtract the fluctuations of the direct current component from the beat signal.

Next, in step S240, the subtractor 213 of the DSP 108A subtracts the average amplitude $A'_h$ calculated in step S230 from the h-th data $D_h$ of the data series $D_1$ to $D_N$ detected in step S210. As a result, as data representing a subtraction beat signal obtained by subtracting the average amplitude $A'_h$ from the beat signal, subtracted data $D''_h$ corresponding to the h-th data $D_h$ is calculated

In step S250, the DSP 108A determines whether the current value of the variable h is equal to the number of pieces of data N of the data series. If h is less than N, 1 is added to the value of the variable h in step S260, and then the processing returns to step S230. As a result, the processing of steps S230 to S240 is repeatedly executed while h = 1 to N is satisfied, and a subtracted data series $D''_1$ to $D''_N$ representing a subtraction beat signal is obtained for the data series of N pieces of data $D_1$ to $D_N$.

If it is determined in step S250 that h = N is satisfied, the processing proceeds to step S270. In step S270, the DSP 108A inputs the subtracted data series $D''_1$ to $D''_N$ obtained from the above processing to the second signal amplitude detection unit 221.

In steps S280 to S360 in FIG. 11, the DSP 108A executes processing similar to steps S10 to S90 in FIG. 5, having described in the first embodiment, on the subtraction beat signal by the second signal amplitude detection unit 221, the second average amplitude calculation unit 222, the interference detection unit 223, the interference suppression unit 224, and the distance calculation unit 225. That is, in step S280, the second signal amplitude detection unit 221 of the DSP 108A detects the amplitude of the subtraction beat signal by detecting the absolute values of the subtracted data series $D''_1$ to $D''_N$ input in step S270.

In step S290, the DSP 108A sets 1 to a variable j.

Next, in step S300, the second average amplitude calculation unit 222 of the DSP 108A calculates a j-th average amplitude $A_j$ in the subtraction beat signal using the current value of the variable j. In this example, the average amplitude $A_j$ is calculated using M pieces of data including the j-th data and its adjacent data out of the subtracted data series of N pieces of data $D''_1$ to $D''_N$ for which the amplitude has been determined in step S280. The average amplitude $A_j$ may be calculated by simple averaging in which absolute values of the M pieces of data are added and then divided by M. Alternatively, the average amplitude $A_j$ may be calculated by dividing the sum of absolute values of the M pieces of data by the number of samples M. Alternatively, the following equation (5) may be used to calculate an effective value obtained as a root mean square of the M pieces of data. Other than the above, the average amplitude $A_j$ as a moving average of the subtraction beat signal can be calculated by any calculation method using the M pieces of data including the j-th data and its adjacent data. Note that like in the first embodiment, M is a design parameter and can be set to any value.

[Equation 3]

$$A_j = \sqrt{\sum_{i=j-M/2}^{j+\frac{M}{2}-1} {D''_i}^2 / M} \qquad \cdots (5)$$

Next, in step S310, the interference detection unit 223 of the DSP 108A detects an interference signal on the basis of the amplitude of the j-th data $D''_j$ from the subtracted data series $D''_1$ to $D''_N$ detected in step S280 and the average amplitude $A_j$ calculated in step S300. In this example, a threshold value is set by multiplying the average amplitude $A_j$ by a predetermined magnification $N_T$, and this threshold value is compared with the amplitude of the data $D''_j$. As a result, if the amplitude of the data $D''_j$ is larger than the threshold value, that is, if $D''_j > A_j \times N_T$, it is determined that there is an interference signal, and the data $D''_j$ is detected as the data position where the interference signal exists, then the processing proceeds to step S320. On the other hand, if the amplitude of the data $D''_j$ is less than or equal to the threshold value, it is determined that there is no interference signal, and the processing proceeds to step S330. Note that like in the first embodiment, the magnification $N_T$ is a design parameter and can be set to any value. Moreover, the magnification $N_T$ may vary as appropriate depending on a surrounding environment of the radar device 1A or the object.

If the processing proceeds from step S310 to step S320, in step S320, the interference suppression unit 224 of the DSP 108A suppresses interference by the interference signal by multiplying the subtraction beat signal in which the interference signal has been detected in step S310 by a predetermined window function. In this example, each pieces of data $D''_{j+k}$ (k = -L to +L) present in a range of the width (length) 2L + 1 of the window function, centered at the data $D''_j$ detected as the data position where the interference signal is present in step S310 among the subtracted data series of N pieces of data $D''_1$ to $D''_N$ the amplitude of which has been detected in step S280, is multiplied by the predetermined window function W(k). This window function W(k) is similar to that of the first embodiment. Alternatively like in the first embodiment, instead of using a window function, interference may be suppressed by invalidating a data series of a predetermined range including the data $D''_j$ in which an interference signal exists. Thereby, data $D'_{j+k}$ in which the interference is suppressed is obtained from the original data $D''_{j+k}$ including the data $D''_j$ in which the interference signal has been detected. When the data $D'_{j+k}$ after the interference suppression is calculated, the processing proceeds to step S330.

In step S330, the DSP 108A determines whether the current value of the variable j is equal to the number of pieces of data N of the data series. If j is less than N, 1 is added to the value of the variable j in step S340, and then the processing returns to step S300. As a result, the processing of steps S300 to S330 is repeatedly executed while j = 1 to N is satisfied, and a data series $D'_1$ to $D'_N$ after interference suppression is obtained for the subtracted data series of N pieces of data $D''_1$ to $D''_N$.

If it is determined in step S330 that j = N is satisfied, the processing proceeds to step S350. In step S350, the distance calculation unit 225 of the DSP 108A performs Fourier transform on the data series $D'_1$ to $D'_N$ after the interference suppression obtained from the above-described processing to decompose the beat signal into frequency components $f_1$ to $f_N$ and calculates power $P_1$ to $P_N$ of these frequency components.

In step S360, the distance calculation unit 225 of the DSP 108A calculates the distance $d_k$ to the object like in the first embodiment using the power $P_1$ to $P_N$ calculated in step S350. After calculating the distance $d_k$ to the object in step S360, the DSP 108A outputs the calculation result to the outside of the radar device 1A and then terminates the processing illustrated in FIGS. 10 and 11.

Note that among the processing described above, in step S230, the first average amplitude calculation unit 212 may derive an average amplitude of the beat signal by using a low-pass filter having a filtering characteristic corresponding to the above-described parameter M' instead of calculating the average amplitude $A'_h$ as the moving average of the beat signal. That is, the first average amplitude calculation unit 212 can be replaced by a low-pass filter. Likewise, in step S300, the second average amplitude calculation unit 222 may derive an average amplitude of the subtracted beat signal by using a low-pass filter having a filtering characteristic corresponding to the above-described parameter M instead of calculating the average amplitude $A_j$ as the moving average of the subtracted beat signal. That is, the second average amplitude calculation unit 222 can be replaced by a low-pass filter.

Also, in step S240, the subtractor 213 may derive subtracted data $D''_h$ by using a high-pass filter having a filtering characteristic corresponding to the average amplitude $A'_h$ instead of subtracting the average amplitude $A'_h$ from the data $D_h$. That is, the subtractor 213 can be replaced by a high-pass filter. Furthermore, the first average amplitude calculation unit 212 and the subtractor 213 may both be replaced by a high-pass filter.

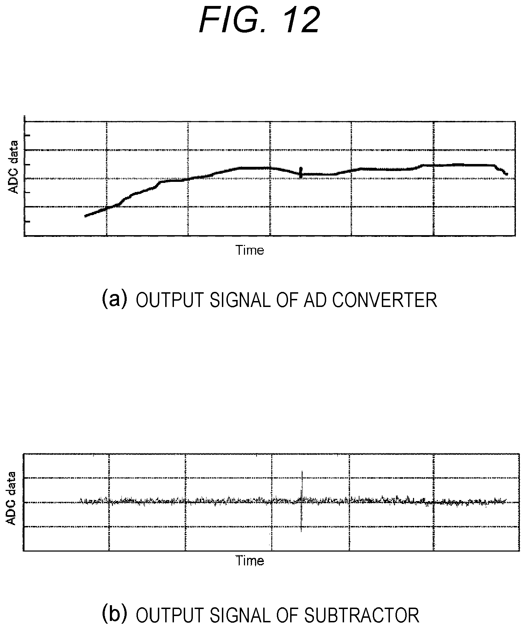

FIG. 12 is a diagram illustrating an example in which signals before and after amplitude fluctuation removal by the processing described in FIGS. 10 and 11 are compared. In FIG. 12, (a) illustrates an exemplary beat signal before amplitude fluctuation removal which is output from the AD converter 107 when there is phase noise. In this signal, a beat signal having a relatively short level and a short cycle is superimposed on a signal the amplitude of which fluctuates largely in a relatively long cycle. For this reason, even when the method described in the first embodiment is applied as it is, the threshold value for detection of interference cannot be set appropriately. On the other hand, (b) illustrates an exemplary beat signal after amplitude fluctuation removal that is output from the subtractor 213 after removal of amplitude fluctuations from the signal of (a) by the method of the present embodiment. In this signal, since the long cycle amplitude fluctuations included in the signal of (a) are removed to cause the average value to be zero, a threshold value for detection of interference can be easily set.

According to the second embodiment of the present invention described above, the radar device 1A includes: the first average amplitude calculation unit 212 that calculates the average amplitude $A'_h$ of the beat signal based on the transmission signal and the reception signal; and the interference detection unit 223 that detects an interference signal with respect to the reception signal on the basis of the average amplitude $A'_h$ of the beat signal calculated by the first average amplitude calculation unit 212. The radar device 1A further includes a subtractor 213 that calculates a subtraction beat signal obtained by subtracting the average amplitude $A'_h$ from the beat signal and a second average amplitude calculation unit 222 that calculates an average amplitude $A_j$ of the subtraction beat signal. The interference detection unit 223 detects the interference signal by a similar method to that of the interference detection unit 123 according to the first embodiment on the basis of the average amplitude $A_j$ of the subtraction beat signal calculated by the second average amplitude calculation unit 222. With this arrangement, in addition to the effects described in the first embodiment, the interference detection in the radar device 1 can be performed accurately even when the level of the reception signal fluctuates significantly.

Note that the embodiments and various variations described above are merely examples, and the present invention is not limited to these contents as long as the features of the invention are not impaired. Although various embodiments and variations have been described above, the present invention is not limited to these contents. Other aspects conceivable within the range of technical ideas of the present invention are also included within the scope of the present invention.

Reference Signs List

| | |
|---|---|
| 1, 1A | radar device |
| 101 | waveform generator |
| 102 | voltage-controlled oscillator |

| 103 | amplifier |
| 104 | low-noise amplifier |
| 105 | mixer |
| 106 | low-pass filter |
| 107 | AD converter |
| 108, 108A | digital signal processor (DSP) |
| 109 | transmission antenna |
| 110 | reception antenna |
| 120, 220 | control unit |
| 121 | signal amplitude detection unit |
| 122 | average amplitude calculation unit |
| 123, 223 | interference detection unit |
| 124, 224 | interference suppression unit |
| 125, 225 | distance calculation unit |
| 211 | first signal amplitude detection unit |
| 212 | first average amplitude calculation unit |
| 213 | subtractor |
| 221 | second signal amplitude detection unit |
| 222 | second average amplitude calculation unit |

**Claims**

1.  A radar device which transmits a frequency-modulated transmission signal, receives a reception signal which is the transmission signal reflected by an object, and measures a distance to the object, the radar device comprising:

    an average amplitude calculation unit which calculates an average amplitude of a beat signal which is based on the transmission signal and the reception signal; and
    an interference detection unit which detects an interference signal with respect to the reception signal on a basis of the average amplitude of the beat signal calculated by the average amplitude calculation unit.

2.  The radar device according to claim 1,
    wherein the interference detection unit detects the interference signal by setting a threshold value obtained by multiplying a predetermined magnification to the average amplitude of the beat signal and comparing the beat signal and the threshold value.

3.  The radar device according to claim 2,
    wherein the interference detection unit changes the magnification depending on a surrounding environment of the radar device or the object.

4.  The radar device according to any one of claims 1 to 3, the radar device further comprising:
    an interference suppression unit which suppresses interference by the interference signal by multiplying the beat signal by a window function.

5.  The radar device according to claim 4,
    wherein the window function at least has a value at a position where the interference signal has been detected is larger than or equal to 0 and less than 1.

6.  The radar device according to any one of claims 1 to 3,
    wherein the average amplitude calculation unit calculates an average value or an effective value of the beat signal at predetermined time as the average amplitude of the beat signal.

7.  The radar device according to claim 1, the radar device further comprising:

    a subtractor which calculates a subtraction beat signal obtained by subtracting the average amplitude from the beat signal; and
    a second average amplitude calculation unit which calculates an average amplitude of the subtraction beat signal, wherein the interference detection unit detects the interference signal on a basis of the average amplitude of the subtraction beat signal calculated by the second average amplitude calculation unit.

8. The radar device according to claim 7,
wherein the interference detection unit detects the interference signal by setting a threshold value obtained by multiplying a predetermined magnification to the average amplitude of the subtraction beat signal and comparing the subtraction beat signal and the threshold value.

9. The radar device according to claim 8,
wherein the interference detection unit changes the magnification depending on a surrounding environment of the radar device or the object.

10. The radar device according to any one of claims 7 to 9, the radar device further comprising:
an interference suppression unit which suppresses interference by the interference signal by multiplying a predetermined range of the subtraction beat signal, including a position where the interference signal has been detected, by a window function.

11. The radar device according to claim 10,
wherein the window function at least has a value at a position where the interference signal has been detected is larger than or equal to 0 and less than 1.

12. The radar device according to any one of claims 7 to 9,
wherein the second average amplitude calculation unit calculates an average value or an effective value of the subtraction beat signal at predetermined time as the average amplitude of the subtraction beat signal.

13. The radar device according to any one of claims 1 to 12,
wherein the transmission signal is an FMCW signal obtained by frequency-modulating a continuous wave.

# FIG. 1

# FIG. 2

# FIG. 3

(a) NARROW BAND INTERFERENCE          (b) BROADBAND INTERFERENCE

EP 3 594 717 A1

# FIG. 4

DIGITAL SIGNAL PROCESSOR (DSP) 108

# FIG. 5

Start

DETECT ABSOLUTE VALUES OF DATA SERIES OF N PIECES
OF DATA $D_1$ TO $D_N$ THAT ARE AD CONVERTED — S10

$j = 1$ — S20

CALCULATE AVERAGE AMPLITUDE $A_j$ FROM
M PIECES OF DATA INCLUDING j-TH DATA
AND ITS ADJACENT DATA: — S30

$$A_j = \sqrt{\sum_{i=j-M/2}^{j+\frac{M}{2}-1} D_i^2 / M}$$

S40

$D_j > A_j \times N_T$ ?　　NO

YES

S50

MULTIPLY WITH WINDOW FUNCTION W(k) (k = -L TO +L)
HAVING A LENGTH OF 2L+1 CENTERED AT $D_j$: 　$D'_{j+k} = W(k)D_{j+k}$

S70

ADD 1 TO j

S60

$j = N$ ?　　NO

YES

PERFORM FOURIER TRANSFORM AND CALCULATE POWER
$P_1$ TO $P_N$ OF FREQUENCY COMPONENTS $f_1$ TO $f_N$ — S80

CALCULATE DISTANCE $d_k$ TO OBJECT FROM FREQUENCY $f_k$
AT WHICH POWER $P_k$ EXCEEDS THRESHOLD VALUE $R_k$ — S90

End

# FIG. 6

THRESHOLD VALUE FOR
INTERFERENCE DETECTION

WINDOW
FUNCTION

1

0

2L+1

THRESHOLD VALUE FOR
INTERFERENCE DETECTION

# FIG. 7

THRESHOLD VALUE FOR
INTERFERENCE DETECTION

WINDOW
FUNCTION

1

0

2L+1

THRESHOLD VALUE FOR
INTERFERENCE DETECTION

# FIG. 8

(a) SIGNAL BEFORE IMPULSE INTERFERENCE SUPPRESSION

(b) SIGNAL AFTER IMPULSE INTERFERENCE SUPPRESSION

OUTPUT OBTAINED BY PERFORMING
FFT TRANSFORM ON SIGNAL BEFORE
IMPULSE INTERFERENCE SUPPRESSION

OUTPUT OBTAINED BY PERFORMING
FFT TRANSFORM ON SIGNAL AFTER
IMPULSE INTERFERENCE SUPPRESSION

(c) COMPARISON OF FFT OUTPUT

# FIG. 9

DIGITAL SIGNAL PROCESSOR (DSP) 108A

| Block | Ref |
|---|---|
| FIRST SIGNAL AMPLITUDE DETECTION UNIT | 211 |
| FIRST AVERAGE AMPLITUDE CALCULATION UNIT | 212 |
| SUBTRACTOR | 213 |
| SECOND SIGNAL AMPLITUDE DETECTION UNIT | 221 |
| SECOND AVERAGE AMPLITUDE CALCULATION UNIT | 222 |
| INTERFERENCE DETECTION UNIT | 223 |
| INTERFERENCE SUPPRESSION UNIT | 224 |
| DISTANCE CALCULATION UNIT | 225 |

1A

110

104 LOW-NOISE AMPLIFIER

105 MIXER

106 LOW-PASS FILTER

107 AD CONVERTER

103 AMPLIFIER

102 VOLTAGE-CONTROLLED OSCILLATOR

101 WAVEFORM GENERATOR

220 CONTROL UNIT

109

# FIG. 10

```
                    ( Start )
                        │
                        ▼
┌─────────────────────────────────────────────────┐
│ DETECT ABSOLUTE VALUES OF DATA SERIES OF N PIECES │──── S210
│ OF DATA D₁ TO D_N THAT ARE AD CONVERTED           │
└─────────────────────────────────────────────────┘
                        │
                        ▼
            ┌─────────────────────┐
            │       h = 1         │──── S220
            └─────────────────────┘
                        │
                        ▼
┌──────────────────────────────────────────────────────────────┐
│ CALCULATE AVERAGE AMPLITUDE A'_h FROM                          │──── S230
│ M' PIECES OF DATA INCLUDING h-TH DATA                          │
│ AND ITS ADJACENT DATA:                                         │
└──────────────────────────────────────────────────────────────┘
```

$$A'_h = \sqrt{\sum_{i=h-M'/2}^{h+\frac{M'}{2}-1} D_i^2 / M'}$$

```
                        │
                        ▼                                    S260
┌──────────────────────────────────────────────┐ S240  ┌──────────────┐
│ SUBTRACT A'_h FROM h-TH DATA:   D''_h = D_h - A'_h │    │  ADD 1 TO h  │
└──────────────────────────────────────────────┘        └──────────────┘
                        │                                       ▲
                        ▼         S250                          │
                   ◇─────────────────◇   NO                     │
                   ◇     h = N ?     ◇───────────────────────────
                   ◇─────────────────◇
                        │
                        │ YES
                        ▼
┌──────────────────────────────────────────────────┐
│ INPUT DATA SERIES OF N PIECES OF DATA D''₁ TO D''_N │──── S270
│ TO SECOND SIGNAL AMPLITUDE DETECTION UNIT          │
└──────────────────────────────────────────────────┘
                        │
                        ▼
                      ( A )
```

# FIG. 11

```
                                    (A)

DETECT ABSOLUTE VALUES OF INPUT DATA SERIES OF N PIECES OF DATA D"₁ TO D"ₙ    S280

                        j = 1                                                  S290

CALCULATE AVERAGE AMPLITUDE Aⱼ FROM                                            S300
M PIECES OF DATA INCLUDING j-TH DATA
AND ITS ADJACENT DATA:
```

$$A_j = \sqrt{\sum_{i=j-M/2}^{j+\frac{M}{2}-1} D''^2_i / M}$$

```
                    S310
              D"ⱼ > Aⱼ × Nₜ ?              NO

                    │ YES                              S320                            S340

MULTIPLY WITH WINDOW FUNCTION W(k)(k=-L TO +L)                              ADD 1 TO j
HAVING A LENGTH OF 2L+1 CENTERED AT D"ⱼ:
```

$$D'_{j+k} = W(k)D''_{j+k}$$

```
                    S330
              j = N ?              NO

                    │ YES

PERFORM FOURIER TRANSFORM AND CALCULATE POWER                               S350
P₁ TO Pₙ OF FREQUENCY COMPONENTS f₁ TO fₙ

CALCULATE DISTANCE dₖ TO OBJECT FROM FREQUENCY fₖ                           S360
AT WHICH POWER Pₖ EXCEEDS THRESHOLD VALUE Rₖ

                    ( End )
```

# FIG. 12

(a) OUTPUT SIGNAL OF AD CONVERTER

(b) OUTPUT SIGNAL OF SUBTRACTOR

**INTERNATIONAL SEARCH REPORT**

| International application No. |
| --- |
| PCT/JP2018/003567 |

**A. CLASSIFICATION OF SUBJECT MATTER**
Int.Cl. G01S13/34(2006.01)i, G01S7/02(2006.01)i, G01S13/93(2006.01)i

According to International Patent Classification (IPC) or to both national classification and IPC

**B. FIELDS SEARCHED**

Minimum documentation searched (classification system followed by classification symbols)
Int.Cl. G01S7/00-G01S7/42, G01S13/00-G01S13/95

Documentation searched other than minimum documentation to the extent that such documents are included in the fields searched
    Published examined utility model applications of Japan    1922-1996
    Published unexamined utility model applications of Japan    1971-2018
    Registered utility model specifications of Japan    1996-2018
    Published registered utility model applications of Japan    1994-2018

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y | WO 2006/123499 A1 (MURATA MANUFACTURING CO., LTD.) 23 November 2006, paragraphs [0001], [0036], [0057]-[0058], claim 5, fig. 2, 13 & US 2008/0094274 A1, paragraphs [0002], [0055], [0080]-[0081], claim 5, fig. 2, 13 & DE 112006001114 T | 1-2, 6, 13<br>3-5, 7-12 |
| Y | JP 2002-257922 A (NATL INST FOR LAND & FRASTRUCTURE MANAGEMENT MLIT) 11 September 2002, paragraph [0012] (Family: none) | 3, 9 |
| Y | JP 2006-300720 A (DENSO CORP.) 02 November 2006, paragraphs [0044], [0066], fig. 1, 6-7 (Family: none) | 4-5, 10-11 |

☒   Further documents are listed in the continuation of Box C.     ☐   See patent family annex.

| | |
| --- | --- |
| *   Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search<br>    25 May 2018 (25.05.2018) | Date of mailing of the international search report<br>    12 June 2018 (12.06.2018) |
| --- | --- |
| Name and mailing address of the ISA/<br>    Japan Patent Office<br>    3-4-3, Kasumigaseki, Chiyoda-ku,<br>    Tokyo 100-8915, Japan | Authorized officer<br><br><br>Telephone No. |

Form PCT/ISA/210 (second sheet) (January 2015)

**INTERNATIONAL SEARCH REPORT**

| International application No. |
|---|
| PCT/JP2018/003567 |

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2003-050275 A (MURATA MANUFACTURING CO., LTD.) 21 February 2003, paragraphs [0014]-[0016], claim 1 & US 2002/0180633 A1, paragraphs [0017]-[0019], claim 1 & EP 1262793 A1 | 7-12 |

Form PCT/ISA/210 (continuation of second sheet) (January 2015)

**REFERENCES CITED IN THE DESCRIPTION**

**Patent documents cited in the description**

• JP H7110373 A